# EUROPÄISCHE PATENTSCHRIFT

(11) **EP 2 910 414 B1**
(45) Veröffentlichungstag und Bekanntmachung des Hinweises auf die Patenterteilung: **17.02.2016**
(21) Anmeldenummer: 15155797.2
(22) Anmeldetag: 19.02.2015
(51) Int. Cl.: B60N 2/58, B60N 2/44, B60N 2/70

(54) **Fahrzeugsitz mit formveränderbaren Seitenwangen**
Vehicle seat with adjustable side frames
Siège de véhicule doté de montants latéraux à forme variable

(30) Priorität: 20.02.2014 DE 102014002211
(43) Veröffentlichungstag der Anmeldung: 26.08.2015
(73) Patentinhaber: GRAMMER AG, 92224 Amberg (DE)
(72) Erfinder: Beier, Wolfgang, 92286 Rieden (DE)
(74) Vertreter: Hannke, Christian

(56) Entgegenhaltungen:
- DE-A1-102010 011 886
- DE-A1-102010 021 067
- GB-A- 2 468 568

## Beschreibung

Die Erfindung betrifft einen Fahrzeugsitz mit einem Sitzpolsterteil und einem Rückenlehnenpolsterteil, wobei das Sitzpolsterteil und/oder das Rückenlehnenpolsterteil links- und rechtsseitig jeweils durch eine formveränderbare Seitenwange zur Abstützung eines Fahrzeugsitzbenutzers begrenzt ist, wobei die jeweilige Seitenwange wenigstens ein in Seitenbreitenrichtung formveränderbares Kissen und mindestens einen Polsteranteil, in welchen das wenigstens eine Kissen eingebettet ist, umfasst. Solche Fahrzeugsitze werden vorwiegend bei gewerblichen Fahrzeugen für den Einsatz auf unwegsamem Gelände verwendet, wie z. B. bei LKWs oder Traktoren. Damit wird bei seitlichen Erschütterungen sowohl der Komfort als auch die Sicherheit eines Fahrzeuges erhöht.

Aus dem Stand der Technik sind Fahrzeugsitze mit einem Rückenlehnenpolsterteil bekannt, wobei das Rückenlehnenpolsterteil links- und rechtsseitig jeweils durch eine aufblasbare formveränderbare Seitenwange begrenzt ist. Solche Seitenwangen bestehen üblicherweise aus einem aufblasbaren Kissen, das in einen Polsterabschnitt aus Schaumstoffmaterial eingebettet ist. Mittels einer Pumpvorrichtung kann üblicherweise Luft in das Kissen oder aus dem Kissen gepumpt werden und auf diese Weise die Form einer Seitenwange an den Körper eines Fahrzeugsitzbenutzers angepasst werden. Dabei wird der Polsterabschnitt aus Schaumstoff elastisch gedehnt. Ferner beschreibt die dem Oberbegriff entsprsprechende Druckschrift DE 10 2009 012 620 A1 eine mechanische Vorrichtung, welche die Seitenwange von außen zusammendrücken und auf diese Weise ihre Form verändern kann. Nachteilig bei sämtlichen Ausführungsformen nach dem Stand der Technik ist, dass häufiges Dehnen und Kontrahieren des Polsterabschnittes aus Schaumstoff zu Verschleißerscheinungen führt. Risse sind oftmals die Folge.

Es ist demzufolge Aufgabe der vorliegenden Erfindung, die Verschleißfestigkeit formveränderbarer Seitenwangen zu verbessern, insbesondere hinsichtlich der Bildung von Rissen.

Die Aufgabe wird durch einen Fahrzeugsitz mit einem Sitzpolsterteil und einem Rückenlehnenpolsterteil gelöst, wobei das Sitzpolsterteil und/oder das Rückenlehnenpolsterteil links- und rechtsseitig jeweils durch eine Seitenwange zur Abstützung eines Fahrzeugsitzbenutzers begrenzt ist, wobei die jeweilige Seitenwange wenigstens ein in Sitzbreitenrichtung formveränderbares Kissen und mindestens einen Polsteranteil, in welchen das wenigstens eine Kissen eingebettet ist, umfasst, wobei in dem mindestens einen Polsteranteil aus Schaumstoffmaterial ein Fasergewebe zu dessen Stabilisierung flächig, das wenigstens eine eingebettete Kissen zumindest teilweise umgreifend, eingeschäumt ist, wobei zumindest in einem Teil der durch das Fasergewebe aufgespannten Fläche die Fasern des Fasergewebes in einem von 0° sich unterscheidenden Winkel zu der von der Sitzbreitenrichtung und der Erhebungsrichtung der Seitenwange aufgespannten Ebene ausgerichtet sind.

Als Erhebungsrichtung der Seitenwange wird hier eine Richtung verstanden, die sowohl senkrecht zu der Längs- als auch zu der Breitenrichtung des Sitzpolsterteils beziehungsweise des Rückenlehnenpolsterteils gerichtet ist. Der Begriff "Erhebungsrichtung" kennzeichnet die Richtungsorientierung einer Formerhebung, die nicht notwendig mit der Ausdehnungsrichtung bei Formveränderung der Seitenwange identisch ist. Bei Seitenwangen des Sitzpolsterteils ist die Erhebungsrichtung der Seitenwangen im Wesentlichen nach oben. Bei den Seitenwangen des Rückenlehnenpolsterteils ist die Erhebungsrichtung der Seitenwangen im Wesentlichen nach vorne. Eine Ausdehnung bei Formveränderung erfolgt hauptsächlich in Sitzbreitenrichtung nach innen und nur teilweise in Erhebungsrichtung.

Eine Faser, die in der von der Sitzbreitenrichtung und der Erhebungsrichtung aufgespannten Ebene ausgerichtet ist, würde bei einer Expansion des Kissens in Sitzbreitenrichtung die Expansion des verschleißfesten Fasergewebes auf die Grunddehnung der Faser beschränken. Ein sich von 0° unterscheidender Winkel zu der Sitzbreitenrichtung weist den Vorteil auf, dass das Fasergewebe insgesamt stärker gedehnt werden kann als die Fasern des Fasergewebes. Dennoch stabilisieren die Fasern weiterhin das Schaumstoffmaterial des Polsteranteils und wirken einem Verschleiß und einer Rissbildung entgegen. Dies weist den Vorteil auf, dass über den Winkel der Fasern zur Bewegungsrichtung gesteuert eine erhöhte Dehnung des eingeschäumten Fasergewebes möglich ist und somit das Schaumstoffmaterial im Verbund mit dem Fasergewebe reißfester ist. Die Fasern in 0°-Lage haben normalerweise fast keine Dehnung. Über die Definition des Winkels kann die dadurch mögliche Dehnung bestmöglich an die Dehnung des Schaumteils bzw. des Verschleißverhaltens des Schaumteils angepasst werden.

Vorteilhaft sind zumindest in einem Teil der durch das Fasergewebe aufgespannten Fläche die Fasern des Fasergewebes in einem Winkel größer als 15°, bevorzugt größer als 25°, noch bevorzugter größer als 40° zu der von der Sitzbreitenrichtung und der Erhebungsrichtung der Seitenwange aufgespannten Ebene ausgerichtet. Vorzugsweise sind weiterhin zumindest in einem Teil der durch das Fasergewebe aufgespannten Fläche die Fasern des Fasergewebes kleiner als 75°, bevorzugt kleiner als 65°, noch bevorzugter kleiner als 50° zu der von der Sitzbreitenrichtung und der Erhebungsrichtung der Seitenwange aufgespannten Ebene ausgerichtet. Je größer der Winkel einer Faserrichtung zur von der Sitzbreitenrichtung und der Erhebungsrichtung aufgespannten Fläche, desto dehnbarer ist das Schaumstoffmaterial. Gleichzeitig nimmt aber die stabilisierende Wirkung der Fasern auf das Schaumstoffmaterial ab, wenn die Fasern zueinander einen kleinen Winkel aufweisen. Setzt man 2 im Wesentlichen zueinander orthogonale Faserrichtungen voraus, weist eine Ausführungsform mit einer der Fasern im 0°-Winkel zu der genannten Ebene die kleinste Dehnbarkeit auf. Bei im Wesentlichen 2 Faserrichtungen, die jeweils einen Winkel von 45° zu der genannten Fläche aufweisen und zueinander orthogonal sind. Bei einem Winkel von etwa 45° wird ein Optimum erzielt, da sich die bei Dehnung entstehenden Rauten gegeneinander verschieben.

Bevorzugt ist das Fasergewebe ein Maschengitter mit Maschen in Parallelogrammform, Rautenform, Rechteckform oder Quadratform. Denkbar sind auch verschiedene andere Polygonformen. Besonders vorteilhaft ist dabei ein Maschengitter mit Maschen in Quadratform. Durch zueinander orthogonal ausgerichtete Faserrichtungen wird der Schaumstoffpolsteranteil sehr homogen bei Ausdehnung stabilisiert. Gleichzeitig lassen sich beide Faserrichtungen in einem Winkel von 45° zur von der Erhebungsrichtung und der Sitzbreitenrichtung aufgespannten Ebene ausrichten. Auf diese Weise ist die Dehnbarkeit des Schaumstoffpolsteranteils bezüglich der Fasern optimiert.
Vorteilhaft beträgt die Faserstärke zwischen 0,1 und 3 mm, bevorzugter zwischen 0,2 und 1,5 mm, noch bevorzugter zwischen 0,5 und 1,2 mm.

Es ist denkbar, dass die Fasern in im Wesentlichen zwei Faserrichtungen ausgerichtet sind und in regelmäßigen Abständen von zwischen einem Millimeter und zwei Zentimetern, bevorzugter zwischen zwei Millimetern und einem Zentimeter, noch bevorzugter zwischen 2,5 und 5 mm, beabstandet vorliegen.

Vorteilhaft ist die jeweilige Seitenwange als ein sich in Polsterlängsrichtung, d.h. in Sitzhöhenrichtung im Falle des Rückenlehnenpolsters und in Sitzlängsrichtung im Falle des Sitzpolsters, erstreckendes, in Erhebungsrichtung schmaler werdendes Polster ausgebildet, welches das Sitzpolster bzw. das Rückenlehnenpolster seitlich begrenzt und zur seitlichen Abstützung eines Fahrzeugsitzbenutzers dient. Bevorzugt ist die Dicke der Seitenwange in Sitzbreitenrichtung vergleichsweise schmal und ihre Innenseite in Sitzbreitenrichtung weist eine für typische Fahrzeugsitzbenutzer geeignete ergonomische Form auf. Es ist denkbar, dass die höchste Erhebung in Sitzbreitenrichtung eine klare Kante ausbildet, sich in Polsterlängsrichtung mit der Seitenwange erstreckt. Diese Kante kann vorteilhaft in der Mitte der Seitenwange in Sitzbreitenrichtung liegen. Es ist jedoch auch denkbar, dass sie weiter außen in Sitzbreitenrichtung liegt, um eine stärkere Polsterung und mehr Komfort zu gewährleisten. Vorzugsweise kann diese Kante jedoch bezüglich der Mitte der Seitenwange weiter innen in Sitzbreitenrichtung liegen, so dass eine stärkere seitliche Abstützung gewährleistet ist.

Eine Seitenwange umfasst üblicherweise den Polsterabschnitt aus Schaumstoff, der auf einer dem Fahrzeugsitzbenutzer zugewandten Seite mit einem Überzug bespannt ist, der beispielsweise aus Stoff oder Leder besteht. An einer dem Fahrzeugsitzbenutzer abgewandten Seite des Schaumstoffs, die sich als Innenseite einer Seitenwange definieren lässt und einem Innengerüst des Sitzes zugewandt ist, weist das Polster einer Seitenwange einen sich bezüglich der Sitzbreitenrichtung spitz in Erhebungsrichtung verjüngenden zu einer sich in Polsterlängsrichtung erstreckenden Kante zulaufenden Hohlraum auf, in dem das wenigstens eine Kissen eingebettet ist, sodass ein in Sitzbreitenrichtung innen liegender Anteil des Schaumstoffs und ein in Sitzbreitenrichtung außen liegender Anteil des Schaumstoffs bezüglich der Kanten des Hohlraumes bei Formänderung des Kissens auseinander gedrückt werden.

Bevorzugt weist eine solche Seitenwange in Polsterlängsrichtung mittig ihre größte Erhebung auf. Es ist denkbar, dass sie dafür eine im Wesentlichen halbrunde oder halbelliptische Form aufweist. Vorteilhaft passt sich eine solche Seitenwangenform an dem Rückenlehnenpolster optimal der Taille eines Fahrzeugsitzbenutzers an. Es ist jedoch auch denkbar, dass die jeweilige Seitenwange eine in Längsrichtung im Wesentlichen konstante Erhöhung in Erhebungsrichtung der Seitenwange aufweist.

Vorteilhaft ist das Fasergewebe an der Innenseite des Polsteranteils angrenzend zu dem wenigstens einen Kissen eingeschäumt.

Bevorzugt ist das jeweils wenigstens eine Kissen aufblasbar ausgebildet. Als Material für das Kissen ist ein folienartiges Kunststoffmaterial, wie z. B. PVC oder Polyurethan, denkbar. Vorteilhaft weist das Kissen an der in Erhebungsrichtung dem Polsterabschnitt zugewandten Seite eine Kante auf, die dafür sorgt, dass sich das Kissen bei Beaufschlagung mit einem Fluid, insbesondere Druckluft, vorwiegend in Sitzbreitenrichtung und weniger oder gar nicht in Erhebungsrichtung ausdehnt. Als Länge des Kissens in Längsrichtung ist ein Bereich zwischen 3 und 50 cm, bevorzugt zwischen 5 und 30 cm, noch bevorzugter zwischen 15 und 25 cm, denkbar. Die Ausdehnung des Kissens in Erhebungsrichtung beträgt vorteilhaft zwischen 3 und 20 cm, noch bevorzugter zwischen 5 und 12 cm. Bevorzugt weist das Kissen mittig in Längsrichtung seine größte Erhebung in Erhebungsrichtung auf.

Zwischen Kissen und Polsterabschnitt ist ein Vlies-Material denkbar, das vorteilhaft als Vlies-Tasche ausgebildet ist. Dies dient der Senkung der Beanspruchung des Schaumstoffpolsteranteils durch Reibung während der elastischen Dehnung oder Kontraktion des Kissens.

Bevorzugt weist der erfindungsgemäße Fahrzeugsitz eine Pumpvorrichtung, welche über eine Zuleitung mit dem jeweils wenigstens einen Kissen verbunden ist, um ein Fluid, insbesondere Druckluft, in das Kissen und aus dem Kissen zu pumpen, auf. Denkbar ist ein Druckmessgerät an der Pumpvorrichtung. Vorteilhaft weist die Pumpvorrichtung ein Steuergerät auf, welches die Kontur einer Seitenwange über die Druckanzeige automatisch an den Körper eines Fahrzeugsitzbenutzers anpasst.

Denkbar ist, dass das Kissen erfindungsgemäß aus zwei Teilkammern besteht, die sich länglich in Erhebungsrichtung des Polsteranteils in diesem erstrecken, wobei die beiden Teilkammern in Erhebungsrichtung des Polsteranteils scharnierartig verbunden sind, sodass der Polsteranteil beim Befüllen scharnierartig in Breitenrichtung auseinander gedrückt wird.

Bevorzugt besteht das erfindungsgemäße Fasergewebe aus zwei Teilflächen, die in einem mittleren Bereich einer Kante, die mit der Kante des Hohlraumes zusammen liegt, miteinander verbunden sind, wobei die Form der gegenüber dem jeweiligen wenigstens einen Kissen in Sitzbreitenrichtung zur Innenseite des Sitzes liegende Teilfläche des Fasergewebes der Form der entsprechenden Seite des Kissens nachempfunden ist, während die außen liegende Teilfläche in den beiden äußeren Bereichen der Kante derart übersteht, dass überstehende Flächenteilabschnitte über die Kante auf die Innenseite geklappt werden können, wo sie mit dem anderen Flächenteilabschnitt überlappen.

Als Material des Fasergewebes ist ein Kunststoff oder ein Textilmaterial denkbar.

Weitere vorteilhafte Ausführungen ergeben sich aus den beigefügten Zeichnungen. Darin zeigen:
- Fig. 1: einen aus dem Stand der Technik bekannten Fahrzeugsitz mit Seitenwangen;
- Fig. 2: ein beispielhaftes erfindungsgemäßes Rückenlehnenpolster mit den Konturen des innen liegenden Fasergewebes;
- Fig. 3: zwei erfindungsgemäße perspektivische Formansichten eines Fasergewebes;
- Fig. 4: ein Schäumwerkzeug mit Schwert, umgriffen von einem Textilfasergewebe;
- Fig. 5: ein aufgerolltes, erfindungsgemäßes Textilfasergewebe;
- Fig. 6: beispielhaftes, erfindungsgemäßes Rückenlehnenpolsterteil, in einer horizontalen Ebene auf mittiger Höhe der Seitenwangen aufgeschnitten;
- Fig. 7: Seitenansicht einer erfindungsgemäßen Seitenwange mit Kontur des innen liegenden Kissens;
- Fig. 8: Kissen mit Zuleitung zu einer Pumpvorrichtung;
- Fig. 9: perspektivische Ansicht eines erfindungsgemäßen aus zwei Teilkammern bestehenden offen liegenden Kissens.

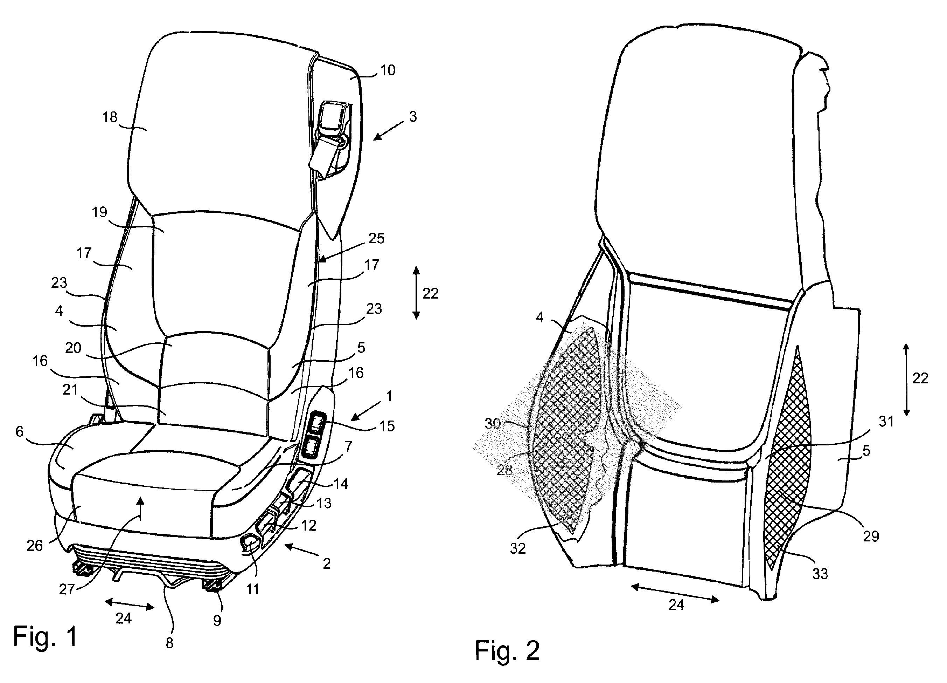

In Fig. 1 ist ein aus dem Stand der Technik bekannter Fahrzeugsitz 1 mit einem Sitzpolsterteil 2 und einem Rückenlehnenpolsterteil 3 dargestellt, wobei sowohl das Sitzpolsterteil 2 als auch das Rückenlehnenpolsterteil 3 links- und rechtsseitig jeweils durch eine Seitenwange 4,5,6,7 zur Abstützung eines Fahrzeugsitzbenutzers begrenzt ist. Oben seitlich neben dem Rückenlehnenpolsterteil 3 ist eine Gurthalterung 5 befestigt. Mittig unter dem Sitz befindet sich ein Griff 8, mithilfe dessen der Sitz in Längsrichtung auf Schienen 9 verschoben werden kann. In Sitzbreitenrichtung außen neben einer der Seitenwangen 4,5,6,7 befindet sich eine Abdeckung eines Gurtaustritts am Rücken 10 mit einer Reihe von Tasten, Hebeln, Griffen oder Schaltern 11,12,13,14,15.

In dieser Ausführungsform sind die Seitenwangen 4,5,6,7 des Rückenlehnenpolsterteils 3 jeweils zweigeteilt in einen unteren Seitenwangenpolsterabschnitt 16 und einen oberen Seitenwangenpolsterabschnitt 17. Das Rückenlehnenpolsterteil 2 ist in eine Reihe von Polsterabschnitten aufgeteilt, einen oberen Rückenlehnenpolsterabschnitt 18, einen mittleren Rückenlehnenpolsterabschnitt 19 und zwei untere Rückenlehnenpolsterabschnitte 20,21.

Die jeweiligen Abschnitte grenzen an Nahtstellen aneinander an. In dieser bevorzugten Ausführungsform befindet sich die sich entlang einer Längsrichtung 22 des Rückenlehnenpolsterteils erstreckende Kante 23 der Seitenwangen 4,5,6,7 des Rückenlehnenpolsterteils in Sitzbreitenrichtung 24 sehr weit außen. Auf diese Weise fällt die Polsterdicke in Erhebungsrichtung 25 der Polsterabschnitte in Sitzbreitenrichtung 24 von außen nach innen zu den unteren Rückenlehnenpolsterabschnitten 20, 21 sehr langsam ab und es wird eine Schalenform erhalten. Die Breite der unteren Rückenlehnenpolsterabschnitte 20, 21 in Sitzbreitenrichtung 24 ist kleiner als die Breite des mittleren Rückenlehnenpolsterabschnittes 19, der sich oberhalb der unteren Rückenlehnenpolsterabschnitte 20, 21 erstreckt und nach oben verbreitert. Die Seitenwangen 4,5,6,7 des Rückenlehnenpolsterteils 3 erstrecken sich in Polsterlängsrichtung 22 des Rückenlehnenpolsterteils seitlich außen neben den unteren Rückenlehnenpolsterabschnitten 20, 21 und dem mittleren Rückenlehnenpolsterabschnitt 19. Der obere Seitenwangenabschnitt 17 verjüngt sich dabei in Sitzbreitenrichtung 24 entlang der Polsterlängsrichtung 22 nach oben neben dem mittleren Rückenlehnenpolsterabschnitt 19. Auf diese Weise können die Seitenwangen neben den unteren Rückenlehnenpolsterabschnitten 20, 21 vorteilhaft in die Taille eines Fahrzeugsitzbenutzers greifen und ihn dort seitlich unterstützen. Oberhalb ist durch den sich verbreiternden mittleren Rückenlehnenpolsterabschnitt 19 und die sich verjüngenden oberen Seitenwagenabschnitte 17 Platz für den Rücken eines Fahrzeugsitzbenutzers.

Der obere Rückenlehnenpolsterabschnitt 18 ist ganz oben an dem Rückenlehnenpolsterteil 3 angrenzend zu dem mittleren Rückenlehnenpolsterabschnitt 19 angeordnet und breiter in Sitzbreitenrichtung als die darunter liegenden.

Das Sitzpolsterteil ist in zwei Sitzpolsterabschnitte 26 aufgeteilt, wobei sich das vordere nach hinten hin verjüngt und auch seine Dicke in Erhebungsrichtung 27 nach hinten hin abnimmt, so dass auch hier eine Schalenform erzielt wird. Die Seitenwangen 6,7, die den Sitzpolsterteil 2 seitlich begrenzen, sind in dieser Ausführungsform einteilig ausgebildet.

Fig. 2 zeigt ein erfindungsgemäßes Rückenlehnenpolsterteil 3 mit links- und rechtsseitiger Seitenwange 5. Die Ausführungsform folgt im Wesentlichen den Merkmalen des Rückenlehnenpolsterteils 3 in Figur 1. Sichtbar sind die Konturen der in die Seitenwangen 4,5 eingebetteten Kissen 28, 29, die jeweils in einem Polsteranteil 30, 31 eingebettet sind und teilweise von einem Fasergewebe 32 umgriffen sind. Eine Sitzbreitenrichtung 24 und eine Rückenlehnenpolsterlängsrichtung 22 ist angegeben. Die Kissen 28. 29 weisen jeweils die Form zweier übereinandergelegter Halbkreise auf, die übereinandergelegt an der runden Seite verbunden sind und an der geraden Seite die Form einer Tasche ausbilden. Die geraden Seiten sind dabei dem Innengerüst des Rückenlehnenpolsterteils zugewandt, so dass die runde Kante in Erhebungsrichtung 25 gerichtet ist und die Flächen in Sitzbreitenrichtung nach innen und außen weisen. Dementsprechend weisen die Seitenwangen 4, 5 entlang der Rückenlehnenpolsterlängsrichtung 22 ein Erhebungsprofil auf, dass sich zu dem Taillenbereich eines Fahrzeugsitzbenutzers hin verdickt und dann wieder verdünnt.

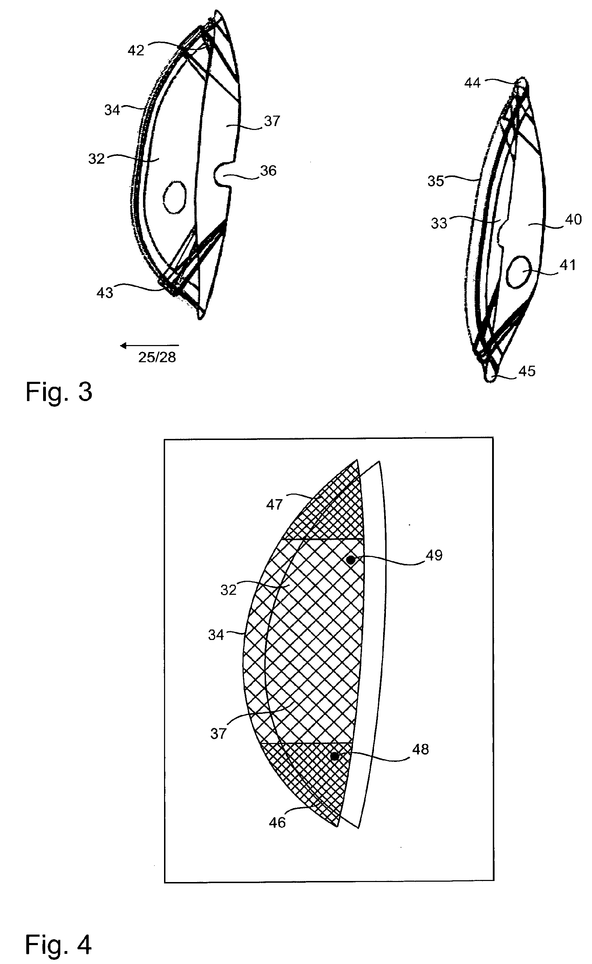

In Fig. 3 sind in einer beispielhaften Ausführungsform die erfindungsgemäßen Konturen des das jeweilige Kissen 28,29 umgreifenden Fasergewebes 32, 33 in perspektivischen Ansichten dargestellt. Sie weisen jeweils eine Kante 34,35 auf, die zwischen der jeweils in Sitzbreitenrichtung innen liegenden Teilfläche 37, 39 und der in Sitzbreitenrichtung außen liegenden Teilfläche 38, 40 trennt und in Erhebungsrichtung 25, 28 außen liegend angeordnet ist. Bei den innen liegenden Teilflächen 37, 39 ist an der flachen Seite des Halbkreises ungefähr in der Mitte des gedachten ganzen Kreises eine halbkreisförmige Öffnung 36 ausgeschnitten. Dies ist zum Beispiel geeignet, den Schlauch einer Pumpvorrichtung an dieser Stelle in das Innere des Fasergewebes zu führen. Weiterhin ist an den außen liegenden Teilflächen 38, 40 ungefähr in der Mitte des unteren Viertelkreises eine kreisförmige Öffnung 41 ausgeschnitten. Diese kann vorteilhaft zu Befestigungszwecken eingesetzt werden. Es ist außerdem denkbar, dass diese kreisförmige Öffnung 41 zu einer besseren Verbindung mit dem Schaumstoffmaterial brauchbar ist. Die Linien an den Ecken 42, 43, 44, 45 weisen in einer bevorzugten Ausführungsform auf eine Materialverstärkung hin. So sind hier schräg laufende dickere Fasern denkbar, um Risse des Textilgewebes an den Ecken zu verhindern. Weiterhin ist das Textilgewebe vorteilhaft an mindestens einer oder mehreren dieser Ecken doppelt ausgebildet.

Fig. 4 zeigt ein Fasergewebe 32 in einem Schäumwerkzeug. Das Fasergewebe wird über das "Schwert" im Schäumwerkzeug drapiert und anschließend eingeschäumt. An die Stelle des Schwertes tritt später ein Kissen 28, wobei die in Sitzbreitenrichtung innen liegende Teilfläche 37 bezüglich der Kante 34 sichtbar ist. Die Form der innen liegenden Teilfläche 37 ist der Form des Kissens 28 nachempfunden. Die außen liegende Teilfläche 38 (nicht sichtbar) steht jedoch in den beiden äußeren Bereichen 46, 47 über die Form der außen liegenden Teilfläche 38 über, sodass überstehende Flächenteilabschnitte 46, 47 über die Kante 34 auf die innere Teilfläche 37 geklappt sind, wo sie mit dem innen liegenden Flächenteilabschnitt 37 überlappen, was in der Figur sichtbar ist. Weiterhin sind Befestigungsmittel 48, 49 dargestellt, mithilfe derer das Fasergewebe vorteilhaft an dem Schäumwerkzeug befestigt ist. In dieser Ausführungsform sind die Befestigungsmittel 48, 49 kleine Bolzen, über die das Netz gespannt und gehalten wird. Das Fasergewebe weist entsprechend runde Öffnungen auf. Über diese Öffnungen wird das Fasergewebe gespannt oder befestigt, bis das Schaumteil nach dem Schäumprozess entnommen wird. Das Fasergewebe bzw. der Verschleißschutz hält im geschäumten Zustand formschlüssig im Schaumteil.

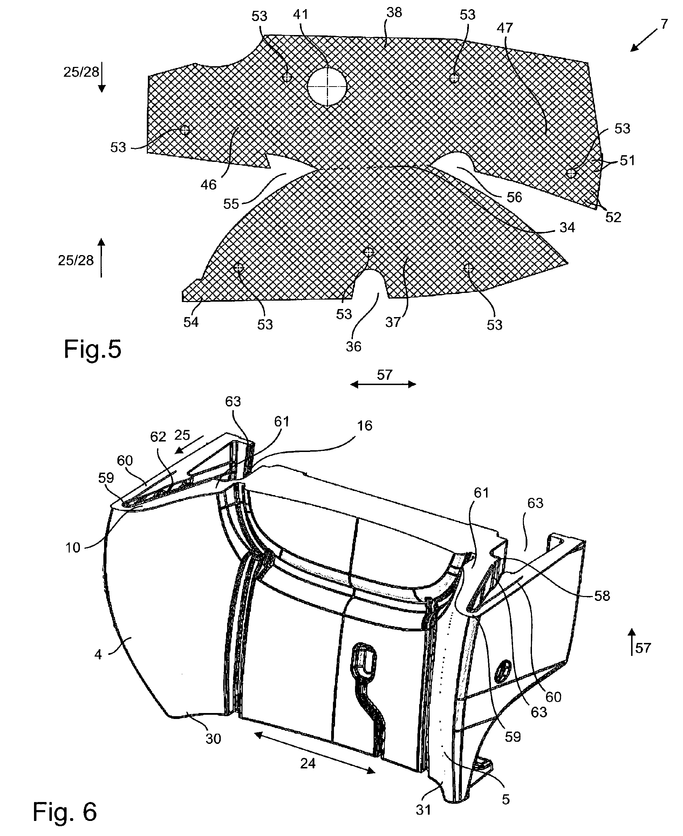

In Fig. 5 ist eine besonders vorteilhafte erfindungsgemäße Ausführungsform des Fasergewebes 32 aufgerollt dargestellt. Die in üblicher Weise in Sitzbreitenrichtung innen liegende Teilfläche 37 ist durch die Kante 34 von der in Sitzbreitenrichtung außen liegenden Teilfläche 38 getrennt. Während die in Sitzbreitenrichtung innen liegende Teilfläche 37 der Form des Kissens 28 nachempfunden ist, steht die außen liegenden Teilfläche 38 in den beiden äußeren Teilflächen 46, 47 der Kante 34 derart über, dass überstehende Flächenteilabschnitte 46,47, wie in Fig. 4 gezeigt, über die Kante 34 auf die innere Teilfläche 37 geklappt werden können. Zur besseren Orientierung ist die Erhebungsrichtung 25, 28 in Fig. 5 angegeben. Die Fasern 51 bilden in dieser erfindungsgemäßen Ausführungsform ein Maschengitter mit Maschen 52 in Quadratform. Sie sind in einem Winkel von 45° zur Erhebungsrichtung 25, 28 angeordnet. In dieser vorteilhaften Ausführungsform ist die Form des Kissens 28, dem die innen liegende Teilfläche 37 nachempfunden ist, in etwa ein Halbkreis. Wie bereits in Fig. 3 und 4 gezeigt, existiert eine halbkreisförmige Öffnung 36 etwa in der Mitte des geraden Randes des Halbkreises der innen liegenden Teilfläche 37. Von der halbkreisförmigen Öffnung 36 etwas in Richtung der Kante 34 ist ein kleines kreisförmiges Befestigungsmittel 53 vorhanden. Weitere Befestigungsmittel 53 sind in Richtung der Randecken zu finden. Die innen liegende Teilfläche 37 des Fasergewebes 32 füllt keinen ganzen Halbkreis aus. Ein Teilstück einer Randecke ist in einem Winkel zwischen 10 und 20° ausgeschnitten. Der Beginn des Schnittes ist eine Strecke von der halbkreisförmigen Öffnung 36 Richtung gedachter Randecke entfernt, die zwischen der Hälfte und 2/3 des Kreisradius beträgt. An der anderen Randecke weist die innen liegende Teilfläche 37 einen kleinen Vorsprung 54 in Radiusrichtung auf, der trapezförmig ist.

Die außen liegende Teilfläche 38 erinnert in dieser vorteilhaften Ausführungsform wenig an die halbkreisförmige Gestalt des Kissens 28. Sie schließt diese halbkreisförmige Form jedoch im Wesentlichen ein und geht darüber hinaus. Setzt man die Linie der Kante 34 zu beiden Seiten hin fort, so entspricht diese Linie beinahe der Randform der außen liegenden Teilfläche 38, die annähernd rechteckig ist und etwa 1,1 bis 1,2 mal länger ist als die größte Ausdehnung der geraden Randlinie des Halbkreises der innen liegenden Teilfläche 37. Auf der Seite, auf der die innen liegende Teilfläche 37 einen trapezförmigen Vorsprung 54 aufweist, ist der Außenrand etwas kleiner als rechteckig. Von der Kante 34 ist die fortgesetzte Außenrandlinie als Schräge ausgebildet in einem Winkel zwischen 5 und 15°. Direkt angrenzend an die Kante 34 ist jedoch noch eine kleine Aussparung 55 vorhanden, die vorteilhaft bewirkt, dass der überstehende Textilbereich 46 besser über die Kante 34 geklappt werden kann wie in Fig. 4 ersichtlich. Auf der anderen Seite, fortgesetzt von der Kante 34, ist die Fläche des Textilgewebes größer als rechteckförmig und die Außenrandlinie setzt sich in einer Schräge in einem Winkel zwischen 15 und 25° von der Kante 34 fort. Auch hier befindet sich eine Aussparung 56, die bevorzugt bewirkt, dass der überstehende Textilbereich 47 besser über die Kante 34 geklappt werden kann. Auch auf der außen liegenden Teilfläche 38 befinden sich Befestigungsmittel 53. Zwei davon sind symmetrisch bezüglich der Senkrechten zur Kante 34 in der Nähe des entgegen der Erhebungsrichtung 25, 28 befindlichen Randes zu finden in einem Abstand zwischen 1/3 und 1/2 der Ausdehnung in Längsrichtung von der Mitte. Die anderen zwei befinden sich in Längsrichtung außen nahe den Ecken des Randes in Erhebungsrichtung 25, 28 außen. Eine kreisförmige Öffnung befindet sich in der außen liegenden Teilfläche 38 von der Mitte der Ausdehnung in Erhebungsrichtung 25, 28 etwas entgegen dieser Richtung verschoben und in Längsrichtung der Seitenwange 57 etwas von der Mitte verschoben. Die beiden Ecken der außen liegenden Teilfläche , die an dem Rand angrenzen, der der Kante 34 gegenüber liegt, weichen ebenfalls etwas von der Rechteckform ab. So ist eine Ecke diagonal etwas Richtung Kante 34 gerückt und die angrenzenden Strecken sind in diese Richtung geknickt. Die Knickkante an dem der Kante 34 gegenüberliegenden Rand befindet sich etwa bei zwischen 1/3 und ½ des Abstandes von der Mitte bis zur Ecke des gedachten Rechtecks. Bei der anderen Ecke des gedachten Rechtecks ist eine Form ausgeschnitten, die etwa der Hälfte eines Schlüssellochs nachgeformt ist. Der Kopf des Schlüssellochs zeigt dabei in Längsrichtung der Seitenwange 57 zur Mitte.

Fig. 6 zeigt den unteren Teil eines Rückenlehnenpolsters 3 mit Seitenwangen 4, 5 in einer horizontalen Ebene in mittiger Höhe der Seitenwangen 4, 5 aufgeschnitten. Die Polsterabschnitte 30, 31 der jeweiligen Seitenwange 4, 5 weisen an einer Rückseite 58 des Rückenlehnenpolsters 2 einen spitz in Erhebungsrichtung 25 zu einer Kante 59 zulaufenden Hohlraum 62 auf, in den das wenigstens eine Kissen 28, 29 üblicherweise eingebettet ist, sodass die beiden Seiten 60, 61 des in den Polsterabschnitt 30, 31 eingeschäumten Schaummaterials bezüglich der Kante des Hohlraumes 16 bei Formänderung des Kissens 5 auseinander gedrückt werden. Die beiden Seitenwangen 4 begrenzen seitlich in Sitzbreitenrichtung 8 das Rückenlehnenpolster. Bei genauerer Betrachtung befindet sich auf der Rückseite 58 des Rückenlehnenpolsters 2 an dem spitz zulaufenden Hohlraum 62 ein verbreiterter Hohlraumbereich 63 mit einer mehr oder weniger rechteckigen Hohlraumstruktur.

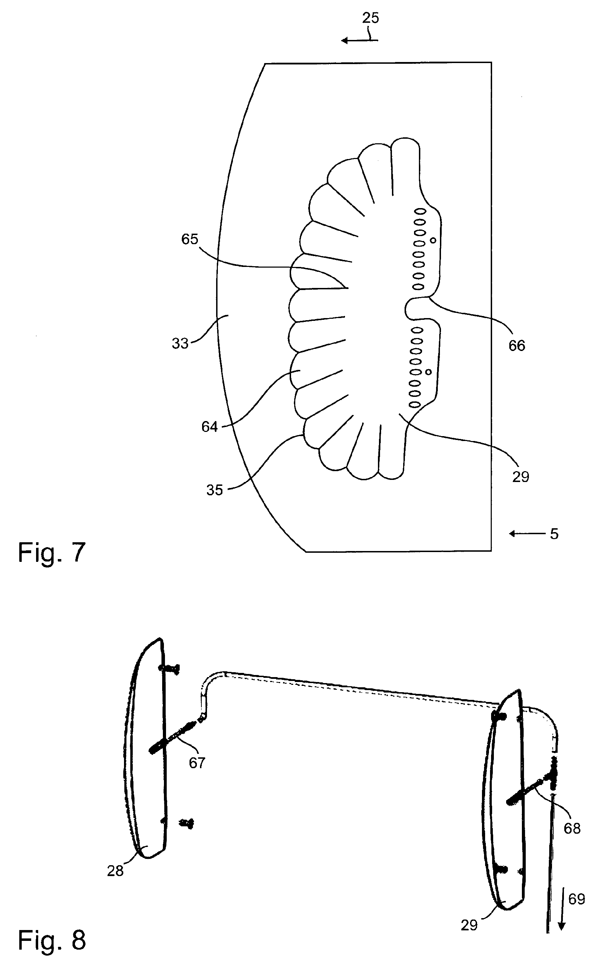

In Fig. 7 ist eine Seitenwange 5 in der Seitenperspektive mit der Kontur einer besonderen erfindungsgemäßen Ausführungsform eines Kissens 29 dargestellt. In Erhebungsrichtung 25, 27 ist angrenzend zu dem Kissen der Polsterabschnitt 33 zu sehen. Das Kissen 29 weist in Erhebungsrichtung außen angrenzend zu dem füllbaren Bereich Kunststofflamellen 64 mit Zwischenräumen 65 auf. Dort wo das Fasergewebe 32 seine halbkreisförmige Öffnung 36 aufweist, weist auch das Kissen eine halbkreisförmige Öffnung 66 auf, durch die ein Schlauch mit dem Kissen 29 verbunden werden kann. In diesem Ausführungsbeispiel sind es insgesamt dreizehn Kunststofflamellen 64 mit zwölf Zwischenräumen 65, die um das Kissen herum angeordnet sind. Sie haben eine trapezförmige flache Form, deren trapezförmige Flächen in die gleiche Richtung zeigen wie die Halbkreisflächen des Kissens 29. Die Zwischenräume 65 sind nur sehr schmal und die trapezförmige Form ist derart gestaltet, dass die Kunststofflamellen 64 nahezu formschlüssig um das Kissen herum angeordnet sind, Ihre Länge in Erhebungsrichtung 25, 27 beträgt zwischen 1/3 und 2/3 der maximalen Kissenerhebung. Ihnen kommt im Wesentlichen die Aufgabe zu, dass die durch die Blase entstehende "Beule" möglichst homogen abgeleitet wird. Ihre Form ist einer Ellipse sehr ähnlich. Vorteilhaft dämpfen sie die Ausdehnung des Kissens 29 in Erhebungsrichtung 25, 27 und sorgen dafür, dass die Beaufschlagung der Kissen mit Druckluft hauptsächlich eine Expansion in Sitzbreitenrichtung bewirkt.

Fig. 8 zeigt beispielhafte Kissen 28, 29 mit Zuleitungselementen 67, 68, welche die Kissen mit einer Zu-, bzw. Ableitung zu einer Pumpvorrichtung, bzw. einem Ventil 69 verbinden. Verbunden sind die Zuleitungselemente 67, 68 mit der halbkreisförmigen Öffnung 66 der Kissen. An dem flachen Rand in der Nähe der Ecken sind Befestigungsmittel 53 für die Rückenstruktur zu finden.

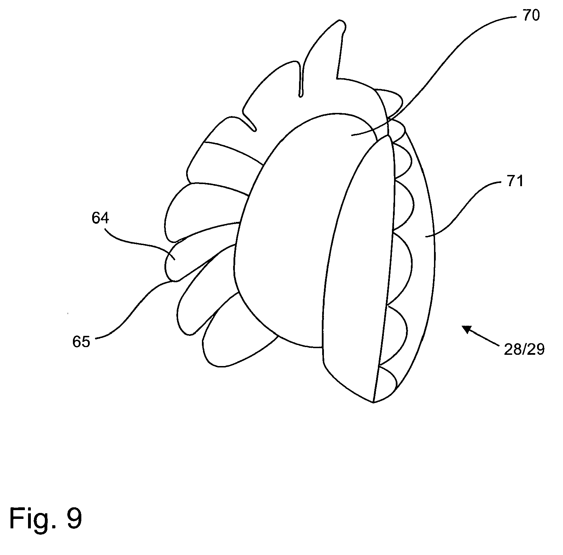

In Fig. 9 ist eine beispielhafte erfindungsgemäße Ausführungsform eines aus zwei Teilkammern 70, 71 bestehenden Kissens 28, 29 mit jeweils Lamellen 64 und Zwischenräumen 65 wie in Fig. 8 dargestellt. Diese Teilkammern sind in Sitzbreitenrichtung nebeneinander angeordnet, weisen beide eine halbkreisförmige Form auf und sind an dem geraden Rand, der dem Gerüst 50 des Polsterteils zugewandt ist, miteinander scharnierartig verbunden, so dass sich die Lamellen 64 einer Teilkammer 70 von denen der anderen Teilkammer 71 bei Befüllung mit Druckluft voneinander entfernen, wenn sich die halbkreisförmigen Teilkammern 70 und 71 in Bohnenform ausdehnen. Es ist denkbar, dass die Lamellen 64 jeweils einer der Teilkammern 70, 71 in Sitzbreitenrichtung mittig an jeder der Teilkammern 70, 71 befinden. Bevorzugt sind sie jedoch bezüglich der Mitte einer Teilkammer 70, 71 in Sitzbreitenrichtung weiter innen angeordnet, so dass die bohnenförmige Ausdehnung der Teilkammern bei Beaufschlagung mit Druckluft überwiegt. In einer anderen vorteilhaften Ausführungsform sind die die Lamellen in Sitzbreitenrichtung weiter außen angeordnet, so dass die Ausdehnung durch Vergrößerung des Abstandes der Lamellen beider Teilkammern 70, 71 bei Beaufschlagung mit Druckluft überwiegt.

### Bezugszeichenliste

- 1: Fahrzeugsitz
- 2: Sitzpolsterteil
- 3: Rückenlehnenpolsterteil
- 4,5: Seitenwangen des Rückenlehnenpolsterteils
- 6,7: Seitenwangen des Sitzpolsterteils
- 8: Griff
- 9: Schienen
- 10: Abdeckung des Gurtaustritts am Rücken
- 11,12, 13, 14, 15: Schalter
- 16: unterer Seitenwangenpolsterabschnitt
- 17: oberer Seitenwangenpolsterabschnitt
- 18: oberer Rückenlehnenpolsterabschnitt
- 19: mittlerer Rückenlehnenpolsterabschnitt
- 20, 21: untere Rückenlehnenpolsterabschnitte
- 22: Längsrichtung des Rückenlehnenpolsterteils
- 23: Kante einer Seitenwange
- 24: Sitzbreitenrichtung
- 25: Erhebungsrichtung eines Rückenlehnenpolsterabschnitts (nach vorne)
- 26: Sitzpolsterabschnitt
- 27: Erhebungsrichtung eines Sitzpolsterabschnitts (nach oben)
- 28: Kissen 1
- 29: Kissen 2
- 30: Polsteranteil 1
- 31: Polsteranteil 2
- 32: Fasergewebe Kissen 1
- 33: Fasergewebe Kissen 2
- 34: Kante 1
- 35: Kante 2
- 36: halbkreisförmige Öffnung
- 37: innen liegende Teilfläche eines ersten Fasergewebes
- 38: außen liegende Teilfläche eines ersten Fasergewebes
- 39: innen liegende Teilfläche eines zweiten Fasergewebes
- 40: außen liegende Teilfläche eines zweiten Fasergewebes
- 41: kreisförmige Öffnung des Fasergewebes
- 42, 43, 44, 45: Ecken der von dem Fasergewebe geformten Taschen
- 46, 47: überstehende Flächenteilabschnitte der außen liegenden Teilfläche
- 48,49: Befestigungsmittel
- 50: Gerüst des Schäumwerkzeugs
- 51: Fasern
- 52: Maschen
- 53: Befestigungsmittel
- 54: Vorsprung an dem Fasergewebe
- 55: Aussparung in dem Fasergewebe
- 56: Aussparung in dem Fasergewebe
- 57: Längsrichtung der Seitenwange
- 58: Rückseite des Seitenwangenpolsters
- 59: Kante
- 60, 61: Seiten des in den Polsterabschnitt eingeschäumten Materials
- 62: Hohlraum
- 63: verbreiterter Hohlraumbereich
- 64: Kunststofflamelle
- 65: Zwischenraum zwischen Kunststofflamellen
- 66: halbkreisförmige Öffnung
- 67, 68: Zuleitungselemente
- 69: Zu- bzw. Ableitung zu einer Pumpvorrichtung bzw. einem Ventil
- 70, 71: Teilkammern des Kissens

## Patentansprüche

1. Fahrzeugsitz (1) mit einem Sitzpolsterteil (2) und einem Rückenlehnenpolsterteil (3), wobei das Sitzpolsterteil (2) und/oder das Rückenlehnenpolsterteil (3) links- und rechtsseitig jeweils durch eine Seitenwange (4,5,6,7) zur Abstützung eines Fahrzeugsitzbenutzers begrenzt ist, wobei die jeweilige Seitenwange (4,5,6,7) wenigstens ein in Sitzbreitenrichtung formveränderbares Kissen (28,29) und mindestens einen Polsteranteil (30,31), in welchen das wenigstens eine Kissen (28,29) eingebettet ist, umfasst,
**dadurch gekennzeichnet, dass**
in dem mindestens einen Polsteranteil (30, 31) aus Schaumstoffmaterial ein Fasergewebe (32, 33) zu dessen Stabilisierung flächig, das wenigstens eine eingebettete Kissen (28, 29) zumindest teilweise umgreifend, eingeschäumt ist, wobei zumindest in einem Teil der durch das Fasergewebe aufgespannten Fläche die Fasern (51) des Fasergewebes (32, 33) in einem von 0° sich unterscheidenden Winkel zur von der Sitzbreitenrichtung (24) und einer Erhebungsrichtung (25, 27) der Seitenwange aufgespannten Ebene ausgerichtet sind.

2. Fahrzeugsitz nach Anspruch 1,
**dadurch gekennzeichnet, dass**
zumindest in einem Teil der durch das Fasergewebe (32, 33) aufgespannten Fläche die Fasern (51) des Fasergewebes (32, 33) in einem Winkel von zwischen 15° und 75°, bevorzugt zwischen 25° und 65°, noch bevorzugter zwischen 40° und 50° zur von der Sitzbreitenrichtung (24) und einer Erhebungsrichtung (25, 27) der Seitenwange aufgespannten Ebene ausgerichtet sind.

3. Fahrzeugsitz nach Anspruch 1 oder 2,
**dadurch gekennzeichnet, dass**
das Fasergewebe (32, 33) ein Maschengitter mit Maschen (52) in Parallelogrammform, Rautenform, Rechteckform oder Quadratform ist.

4. Fahrzeugsitz nach einem der Ansprüche 1-3,
**dadurch gekennzeichnet, dass**
die jeweilige Seitenwange (4, 5, 6, 7) als im Wesentlichen senkrecht zur Sitzbreitenrichtung (24) verlaufende längliche Erhebung ausgebildet ist und dessen Polsteranteil (30, 31) an einer Innenseite (37) einen spitz in Erhebungsrichtung (25, 27) zu einer Kante (59) zulaufenden Hohlraum (62) aufweist, in den das wenigstens eine Kissen (28, 29) eingebettet ist, so dass die beiden Seiten (60, 61) bezüglich der Kante (59) des Hohlraumes (62) bei Formänderung des Kissens (5) auseinander gedrückt werden.

5. Fahrzeugsitz nach Anspruch 4,
**dadurch gekennzeichnet, dass**
das Fasergewebe (32, 33) an einer Rückseite (58) des Polsteranteils (30, 31) angrenzend zu dem wenigstens einen Kissen (28, 29) eingeschäumt ist.

6. Fahrzeugsitz nach einem der Ansprüche 1-5,
**dadurch gekennzeichnet, dass**
das jeweils wenigstens eine Kissen (28, 29) aufblasbar ausgebildet ist.

7. Fahrzeugsitz nach Anspruch 6,
**gekennzeichnet durch**
eine Pumpvorrichtung (69), welche über eine Zuleitung (67, 68) mit dem jeweils wenigstens einen Kissen (28, 29) verbunden ist, um ein Fluid, insbesondere Druckluft, in das Kissen und aus dem Kissen zu pumpen.

8. Fahrzeugsitz nach einem der Ansprüche 6 und 7,
**dadurch gekennzeichnet, dass**
das Kissen (28, 29) aus zwei Teilkammern (70, 71) besteht, die sich länglich in Erhebungsrichtung (25, 27) des Polsteranteils (25, 27) in diesem erstrecken, wobei die beiden Teilkammern (70, 71) in Erhebungsrichtung (25, 28) des Polsteranteils (30, 31) scharnierartig verbunden sind, so dass der Polsteranteil (30, 31) beim Befüllen scharnierartig in Breitenrichtung (24) auseinander gedrückt wird.

9. Fahrzeugsitz nach einem der Ansprüche 1 bis 8,
**dadurch gekennzeichnet, dass**
das Fasergewebe (32, 33) aus zwei Teilflächen (37, 38, 39, 40) besteht, die in einem mittleren Bereich der Kante (34, 35) miteinander verbunden sind, wobei die Form der gegenüber dem jeweiligen wenigstens einen Kissen (28, 29) in Sitzbreitenrichtung (24) zur Innenseite des Sitzes liegende Teilfläche (37, 39) des Fasergewebes der Form der entsprechenden Seite des Kissens (5) nachempfunden ist, während die außen liegende Teilfläche (38, 40) in den beiden äußeren Bereichen (46, 47) der Kante (32) derart übersteht, dass überstehende Flächenteilabschnitte (46, 47) über die Kante (32) auf die Innenseite (37, 39) geklappt werden können, wo sie mit dem anderen Flächenteilabschnitt (37, 39) überlappen.

10. Fahrzeugsitz nach einem der Ansprüche 1 bis 9,
**dadurch gekennzeichnet, dass**
das Fasergewebe (32) aus einem Kunststoff oder einem Textilmaterial besteht.

## Claims

1. Vehicle seat (1) comprising a seat cushion part (2) and a backrest cushion part (3), the seat cushion part (2) and/or the backrest cushion part (3) being delimited on the left-hand and right-hand side by respective side cheeks (4, 5, 6, 7) for supporting a vehicle seat user, the respective side cheeks (4, 5, 6, 7) comprising at least one cushion (28, 29) which can change shape in the width direction of the seat, and at least one cushion portion (30, 31) in which the at least one cushion (28, 29) is embedded,
**characterised in that**,
a fibrous tissue (32, 33) is embedded in a planar manner in foam in the at least one cushion portion (30, 31) made of foam material, in order to stabilise said cushion portion, which fibrous tissue encompasses at least one embedded cushion (28, 29), the fibres (51) of the fibrous tissue (32, 33) being oriented, at least in one part of the surface spanned by the fibrous tissue, at a non-zero angle to the plane spanning the width direction of the seat (24) and an elevation direction (25, 27) of the side cheek.

2. Vehicle seat according to claim 1,
**characterised in that**,
at least in one part of the surface spanned by the fibrous tissue (32, 33), the fibres (51) of the fibrous tissue (32, 33) are oriented at an angle of between 15° and 75°, preferably of between 25° and 65°, even more preferably of between 40° and 50° to the plane spanning the width direction of the seat (24) and an elevation direction (25, 27) of the side cheek.

3. Vehicle seat according to either claim 1 or claim 2,
**characterised in that**
the fibrous tissue (32, 33) is a mesh grid having meshes (52) in the shape of a parallelogram, a rhomboid, a rectangle or a square.

4. Vehicle seat according to any of claims 1 to 3,
**characterised in that**
each respective side cheek (4, 5, 6, 7) is formed as an elongate elevation extending substantially perpendicularly to the seat width direction (24) and the cushion portion (30, 31) thereof comprises a cavity (62) on an inner side (37), which cavity points in the elevation direction (25, 27) to an edge (59), and in which cavity the at least one cushion (28, 29) is embedded in such a way that the two sides (60, 61) are pressed apart relative to the edge (59) of the cavity (62) when the cushion changes shape.

5. Vehicle seat according to claim 4,
**characterised in that**
the fibrous tissue (32, 33) is embedded in foam at a rear side (58) of the cushion portion (30, 31) adjacent to the at least one cushion (28, 29).

6. Vehicle seat (1) according to any of claims 1 to 5,
**characterised in that**
the at least one cushion (28, 29) is formed in each case so as to be inflatable.

7. Vehicle seat according to claim 6,
**characterised by**
a pump device (69) which is connected to the at least one cushion (28, 29) in each case via a supply line (67, 68) in order to pump a fluid, in particular compressed air, into the cushion and out of the cushion.

8. Vehicle seat according to either claim 6 or claim 7,
**characterised in that**
the cushion (28, 29) consists of two sub-chambers (70, 71) which extend in the cushion portion (25, 27) in an elongate manner in the elevation direction (25, 27) thereof, the two sub-chambers (70, 71) being connected in a hinge-like manner in the elevation direction (25, 28) of the cushion portion (30, 31) in such a way that the cushion portion (30, 31) is pressed apart in a hinge-like manner in the width direction (24) when it is being filled.

9. Vehicle seat according to any of claims 1 to 8,
**characterised in that**
the fibrous tissue (32, 33) consists of two part surfaces (37, 38, 39, 40) which are interconnected in a middle region of the edge (34, 35), the shape of the part surface (37, 39) of the fibrous tissue positioned opposite the respective at least one cushion (28, 29), on the inner side of the seat, in the seat width direction (24) is modelled on the shape of the corresponding side of the cushion (5), whilst the part surface (38, 40) positioned on the outside in the two outer regions (46, 47) of the edge (32) projects in such a way that projecting surface segments (46, 47) can be folded over the edge (32) onto the inner side (37, 39), where said surface segments overlap with the other surface segment (37, 39).

10. Vehicle seat according to any of claims 1 to 9,
**characterised in that**
the fibrous tissue (32) consists of a plastics material or a textiles material.

## Revendications

1. Siège de véhicule (1) avec une partie de garniture d'assise (2) et une partie de garniture de dossier (3), la partie de garniture d'assise (2) et/ou la partie de garniture de dossier (3) étant limitées, du côté gauche et du côté droit, par une joue latérale (4, 5, 6, 7) respective pour le soutien d'un utilisateur du siège de véhicule, la joue latérale (4, 5, 6, 7) respective comprenant au moins un coussin (28, 29) déformable dans la direction de la largeur du siège et au moins une partie de garniture (30, 31) dans laquelle l'au moins un coussin (28, 29) est intégré,
**caractérisé en ce que**,
dans l'au moins une partie de garniture (30, 31) en matériau alvéolaire, un tissu à fibres (32, 33), entourant au moins partiellement l'au moins un coussin intégré (28, 29), est enrobé de mousse sur toute sa surface pour sa stabilisation, les fibres (51) du tissu à fibres (32, 33) étant orientées, dans au moins une partie de la surface tendue par le tissu à fibres, avec un angle de 0° par rapport au plan formé par la direction de la largeur du siège (24) et une direction d'élévation (25, 27) de la joue latérale.

2. Siège selon la revendication 1,
**caractérisé en ce que**
au moins dans une partie de la surface tendue par le tissu à fibres (32, 33), les fibres (51) du tissu à fibres (32, 33) sont orientées avec un angle entre 15° et 75°, de préférence entre 25° et 65°, de préférence entre 40° et 50° par rapport au plan formé par la direction de la largeur du siège (24) et une direction d'élévation (25, 27) de la joue latérale.

3. Siège selon la revendication 1 ou 2,
**caractérisé en ce que**
le tissu à fibres (32, 33) est une grille de mailles avec des mailles (52) présentent la forme de parallélogrammes, de losanges, rectangulaire ou carrée.

4. Siège selon l'une des revendications 1 à 3,
**caractérisé en ce que**
la joue latérale (4, 5, 6, 7) respective est conçue comme une élévation longitudinale s'étendant de manière essentiellement perpendiculaire à la direction de la largeur du siège (24) et sa partie de garniture (30, 31) comprend à l'intérieur (37) un espace creux (62), qui s'étend en pointe dans la direction d'élévation (25, 27) vers une arête (59), dans lequel l'au moins un coussin (28, 29) est intégré, de façon à ce que les deux côtés (60, 61) soient écartés l'un de l'autre par rapport à l'arête (59) de l'espace creux (62) lors de la déformation du coussin.

5. Siège de véhicule selon la revendication 4,
**caractérisé en ce que**
le tissu à fibres (32, 33) est enrobé de mousse au niveau d'un côté arrière (58) de la partie de garniture (30, 31) à proximité de l'au moins un coussin (28, 29).

6. Siège selon l'une des revendications 1 à 5,
**caractérisé en ce que**
l'au moins un coussin (28, 29) respectif est conçu de façon à pouvoir être gonflé.

7. Siège de véhicule selon la revendication 6,
**caractérisé en ce qu'**
un dispositif de pompage (69), relié par l'intermédiaire d'une conduite d'alimentation (67, 68) à l'au moins un coussin (28, 29) afin de pomper un fluide, plus particulièrement de l'air comprimé, dans le coussin et hors du coussin.

8. Siège selon l'une des revendications 6 et 7,
**caractérisé en ce que**
le coussin (28, 29) est constitué de deux chambres (70, 71) partielles qui s'étendent longitudinalement dans la direction d'élévation (25, 27) de la partie de garniture (25, 27) dans celle-ci, les deux chambres (70, 71) partielles étant reliées à l'aide d'une charnière dans la direction d'élévation (25, 28) de la partie de garniture (30, 31), de façon à ce que la partie de garniture (30, 31) soit écartée à la manière d'une charnière dans la direction de la largeur (24) lors d'un remplissage.

9. Siège selon l'une des revendications 1 à 8,
**caractérisé en ce que**
le tissu à fibres (32, 33) est constitué de deux surfaces partielles (37, 38, 39, 40) qui sont reliées entre elles dans une partie centrale de l'arête (34, 35), la forme de la surface partielle (37, 39) du tissu à fibres, qui se trouve en face de l'au moins un coussin (28, 29) respectif dans la direction de la largeur du siège (24) par rapport à l'intérieur du siège, correspond à la forme du côté correspondant du coussin (5), tandis que la surface partielle extérieure (38, 40) dépasse dans les parties externes (46, 47) de l'arête (32) de façon à ce que les portions de la partie de surface (46, 47) dépassant de l'arête (32) peuvent être rabattues sur l'intérieur (37, 39), où elles se superposent avec l'autre portion de partie de surface (37, 39).

10. Siège selon l'une des revendications 1 à 9,
**caractérisé en ce que**
le tissu à fibres (32) est constitué d'une matière plastique ou d'un matériau textile.
